# EUROPEAN PATENT SPECIFICATION

(11) **EP 4 475 221 B1**
(45) Date of publication and mention of the grant of the patent: **17.12.2025**
(21) Application number: 24161555.8
(22) Date of filing: 05.03.2024
(51) Int. Cl.: H01M 4/36, H01M 4/133, H01M 4/134, H01M 4/1393, H01M 4/1395, H01M 4/38, H01M 4/583, H01M 4/62

(54) **NEGATIVE ELECTRODE FOR RECHARGEABLE LITHIUM BATTERY AND RECHARGEABLE LITHIUM BATTERY INCLUDING SAME**
NEGATIVE ELEKTRODE FÜR EINE WIEDERAUFLADBARE LITHIUMBATTERIE UND WIEDERAUFLADBARE LITHIUMBATTERIE DAMIT
ÉLECTRODE NÉGATIVE POUR BATTERIE AU LITHIUM RECHARGEABLE ET BATTERIE AU LITHIUM RECHARGEABLE LA COMPRENANT

(30) Priority: 07.06.2023 KR 20230073197
(43) Date of publication of application: 11.12.2024
(73) Proprietor: Samsung SDI Co., Ltd., Yongin-si, Gyeonggi-do 17084 (KR)
(72) Inventor: SHIN, Donghyun, 17084 Yongin-si (KR); CHA, Jungwook, 17084 Yongin-si (KR); KWON, Hyejin, 17084 Yongin-si (KR); CHO, Youngyeol, 17084 Yongin-si (KR); KIM, Jaehong, 17084 Yongin-si (KR)
(74) Representative: Marks & Clerk LLP

(56) References cited:
- CN-A- 114 497 451
- JP-A- 2018 125 077
- US-A1- 2022 263 076

## Description

### BACKGROUND

### 1. Field

Embodiments of this disclosure relate to a negative electrode for a rechargeable lithium battery and a rechargeable lithium battery.

### 2. Description of the Related Art

Recently, the rapid supplement of electronic devices such as mobile phones, laptop computers, and electric vehicles using batteries benefit from surprising increases in demand for rechargeable batteries having relatively high capacity and lighter weight. For example, a rechargeable lithium battery has recently drawn attention as a driving power source for portable devices, as it has lighter weight and high energy density. Accordingly, research and development for improving performances of rechargeable lithium batteries are actively being undertaken.

Rechargeable lithium batteries include a positive electrode and a negative electrode which include active material being capable of intercalating and deintercalating lithium ions, and an electrolyte, and generate electrical energy due to the oxidation and reduction reactions if lithium ions are intercalated and deintercalated into the positive electrode and the negative electrode.

As a positive active material for a rechargeable lithium battery, transition metal compounds such as lithium cobalt oxide, lithium nickel oxide, lithium manganese oxide, and/or the like may be used. For the negative active material, crystalline carbon such as natural graphite and/or artificial graphite, and/or amorphous carbon may be mainly used, but the carbonaceous material has low capacity of 360 mAh/g, and thus, investigation for silicon-based active materials such as Si having a capacity of four times or more than that have been actively undertaken. US 2022/263076 A1 and CN 114 497 451 A disclose negative electrodes for rechargeable lithium batteries.

### SUMMARY

One or more embodiments of the present disclosure provide a negative electrode that exhibits high energy density and excellent fast charge performance.

Another embodiment provides a rechargeable lithium battery including the negative electrode.

One or more embodiments provide a negative electrode for a rechargeable lithium battery including a current collector; a first layer on the current collector, the first layer consisting of a Si-based material, a linear conductive material, a spherical conductive material, and a first binder; and a second layer on the first layer, the second layer consisting of crystalline carbon and a second binder.

The linear conductive material may include carbon nanotube, carbon nanofiber, or a combination thereof. The carbon nanotube may include a single-walled carbon nanotube, a double-walled carbon nanotube, a multi-walled carbon nanotube, or a combination thereof.

The spherical conductive material may include carbon black, denka black, ketjen black, acetylene black, crystalline carbon, or a combination thereof.

A thickness of the first layer may be thinner than a thickness of the second layer. In one or more embodiments, a ratio of the thickness of the first layer to a thickness of the second layer may be about 5:95 to about 30:70.

A mixing ratio of the linear conductive material and the spherical conductive material may be about 10:90 to about 90:10 by a weight ratio.

An amount of the linear conductive material may be about 0.1 wt% to about 1.0 wt% based on the total 100 wt% of the first layer.

An amount of the spherical conductive material may be about 0.1 wt% to about 1.0 wt% based on the total 100 wt% of the first layer.

The linear conductive material may have an average length of about 0.5 µm to about 20 µm.

The spherical conductive material may have a particle diameter (e.g. average particle diameter, such as D50) of about 1 nm to about 100 nm.

The Si-based material may include Si, Si-C composite, SiOₓ (0<x<2), Si-Q alloy (herein Q is an element selected from an alkali metal, an alkaline-earth metal, a Group 13 element, a Group 14 element, a Group 15 element, a Group 16 element, a transition metal, a rare earth element, and a combination thereof, and not Si), or a combination thereof.

The crystalline carbon (e.g. in the second layer) may include natural graphite, artificial graphite, or a combination thereof.

Another embodiment provides a rechargeable lithium battery including the negative electrode, a positive electrode, and an electrolyte.

At least some of the above and other features of the invention are set out in the claims.

A negative electrode for a rechargeable lithium battery according to one or more embodiments may exhibit high energy density and excellent fast charge performance.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a schematic diagram showing a cross-sectional view of a negative electrode for a rechargeable lithium battery according to one or more embodiments.
FIG. 2 is a schematic diagram showing a perspective view of a rechargeable lithium battery according to one or more embodiments.

### DETAILED DESCRIPTION

Hereinafter, embodiments of the present disclosure are described in more detail. However, these embodiments are merely examples, the present disclosure is not limited thereto, and the present disclosure is defined by the scope of the appended claims.

The term "combination thereof" may include a mixture, a laminate, a complex, a copolymer, an alloy, a blend, a reactant of constituents.

The term "comprise", "include" or "have" are intended to designate that the performed characteristics, numbers, step, constituted elements, or a combination thereof is present, but it should be understood that the possibility of presence or addition of one or more other characteristics, numbers, steps, constituted element, or a combination are not to be precluded in advance.

In the specification, unless explicitly described to the contrary, the word "comprise" and variations such as "comprises" or "comprising" will be understood to imply the inclusion of stated elements but not the exclusion of any other element.

In the specification, the terms "about" and "substantially" used throughout the present specification refer to the meaning of the mentioned with inherent preparation and material permissible errors if presented, and are used in the sense of being close to or near that value. They are used to help understand the subject matter of the present disclosure.

In the specification, "A and/or B" indicates "A or B or both of them."

In the present disclosure, if a definition is not otherwise provided, a particle diameter indicates an average particle diameter (D50) where a cumulative volume is about 50 volume% in a particle size distribution. The average particle size (D50) may be measured by any suitable method generally used in the art, for example, by a particle size analyzer, and/or by a transmission electron microscopic image, and/or a scanning electron microscopic image. In some embodiments, a dynamic light-scattering measurement device is used to perform a data analysis, and the number of particles is counted for each particle size range, and from this, the average particle diameter (D50) value may be easily obtained through a calculation.

As used herein, the term "soft carbon" refers to graphitizable carbon materials and are readily graphitized by heat treatment at a high temperature, e.g., 2800 °C, and "hard carbon" refers to non-graphitizable carbon materials and are slightly graphitized by heat treatment.

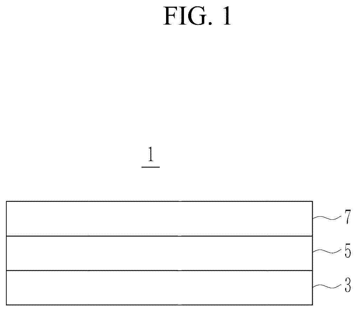

A negative electrode for a rechargeable lithium battery according to one or more embodiments includes a current collector, a first layer on the current collector (e.g. in direct contact with the current collector), and a second layer on the first layer (e.g. in direct contact with the first layer). The first layer consists of a Si-based material, a linear conductive material, a sphere (e.g., point) conductive material (e.g., a spherical conductive material that is electrically conductive and has a spherical or generally spherical shape), and a first binder, and the second layer consists of crystalline carbon and a second binder. FIG. 1 schematically shows the negative electrode 1 according to one or more embodiments, and in the negative electrode 1, the first layer 5 is between the current collector 3 and the second layer 7.

The first layer may be on one or both sides of the current collector, and if the first layer is on both sides, the second layer may also be on both sides.

As such, the negative electrode according to one or more embodiments includes the Si-based material together with the linear conductive material and a spherical conductive material in the first layer and does not include a conductive material in the second layer including the crystalline carbon.

Because the Si-based material is used together with the linear conductive material and the spherical conductive material in the first layer (e.g. directly contacting the current collector), the electrical conductivity and adhesion may be improved or imparted to the Si-based material, and the reduction in volume expansion and electrical connection may be improved or maintained, thereby improving cycle-life retention. If one selected from the linear conductive material and the spherical conductive material is not included in the first layer, for example, if only the linear conductive material is included in the first layer, the adherence may be deteriorated or reduced and bubbles may be generated during coating on the current collector, and if only the spherical conductive material is included in the first layer, the effects for maintaining electrical connection may be unsuitable or unsatisfactory due to volume expansion.

The negative electrode according to one or more embodiments includes the linear conductive material and the spherical conductive material together with the Si-based material in the first layer, and thus, the merit or features of the linear conductive material and the merit or features of the spherical conductive material may both be utilized and the shortcomings of the linear conductive material and the spherical conductive material may be compensated, so that a trade-off of effects may be realized, thereby improving overall performance.

As the first layer contacted with the current collector contains the Si-based material, the linear conductive material, and the spherical conductive material, improvements in adherence and reduction in volume expansion may be obtained. If the layer containing the Si-based material, the linear conductive material, and the spherical conductive material is on an outmost surface of the negative electrode, for example, not in direct physical contact with the current collector, the conductive material inhibits or reduces the movement of lithium ions, and thus, the desired effects may not be obtained.

If the first layer includes crystalline carbon, the Si-based material and crystalline carbon are all expanded during charge and discharge to increase a mechanical stress, and thus, the active material is separated from the current collector, and/or the electrical contact with the current collector may be reduced, thereby deteriorating or reducing performance. If the first layer further includes crystalline carbon, the side reaction due to impurities may be increased to deteriorated or reduced performance.

In one or more embodiments, the second layer consists of only crystalline carbon and the binder. If the second layer includes the conductive material, the lithium ion transference may be decreased, thereby deteriorating or reducing a fast charging characteristic. If the second layer further includes the Si-based material, the reaction starts from the surface of the active material layer during fast charging, so that mainly silicon is used initially, and thus, silicon volume expansion occurs mainly on the surface of the active material layer and crack occurrence may be decreased due to silicon volume expansion, which decreases electrical connection, thereby fading or reducing cycle-life characteristics. If the Si-based material is included in the second layer, the surface reaction may be increased, thereby increasing Si expansion, which may be counteracted by increasing the amounts of the conductive material and the binder in the second layer, thereby causing fading or reduced performance.

In one or more embodiments, the thickness of the first layer may be thinner than the thickness of the second layer, which helps to induce the reaction of the second layer during the fast charge reaction, thereby reducing volume expansion of the first layer, and thus, the fast charging performances of long cycle-life may be maintained or improved. For example, a ratio of the thickness of the first layer to the thickness of the second layer may be about 5:95 to about 30:70, about 10:90 to about 25:75, or about 15:85 to about 20:80 (e.g. about 7:93 to about 20:80, about 7.5:92.5 to about 15:85, about 8:92 to about 12:88, or about 8.5:91.5 to about 10:90). If the thickness ratio of the first layer to the second layer is within the foregoing ranges, fast charging cycle-life retention may be further improved.

While the thicknesses of the first layer and the second layer may satisfy the foregoing conditions, the thickness of the first layer may be suitably adjusted within the range of about 10 µm to about 190 µm (e.g. about 10 µm to about 50 µm, about 10 µm to about 40 µm, about 10 µm to about 30 µm, or about 10 µm to about 20 µm).

In one or more embodiments, the thickness ratio and the thicknesses of the first layer and the second layer indicate thickness after the negative electrode preparation, and for example, may mean thickness after the first layer composition is coated on a current collector and dried, and the second layer composition is coated and dried followed by pressurizing. The pressurization may be performed under any suitable general battery fabrication conditions used in the art.

In one or more embodiments, the linear conductive material refers to a conductive material (e.g., an electrically conductive material) in the form of a long fiber in the longitudinal, and which has a long axis and a short axis. Such a linear conductive material may be carbon nanotube, carbon nanofiber, or a combination thereof, and in one or more embodiments, may be carbon nanotube. The carbon nanotube may include a single-walled carbon nanotube, a double-walled carbon nanotube, multi-walled carbon nanotube, or a combination thereof.

An average length of the linear conductive material may be about 0.5 µm to about 20 µm, about 0.7 µm to about 20 µm, about 1 µm to about 20 µm, about 1 µm to about 15 µm, or about 1 µm to about 10 µm. The length of the linear conductive material refers to a length of the long axis. The length of the linear conductive material does not indicate only a substantially completely straight line, and it may be a length corresponding to a long length of the linear conductive material presented in the first layer. If the average length of the linear conductive material is within the foregoing ranges, a soft conductive network may be effectively formed.

In one or more embodiments, the length may be measured by a SEM image for the surface of the negative active material, but it is not limited thereto, and thus, it may be measured by any techniques as long as the length of the linear conductive material is measured. The length may be an average length.

The spherical conductive material indicates a particle-shaped conductive material (e.g., a particle-shaped electrically conductive material), and may be carbon black, denka black, ketjen black, acetylene black, crystalline carbon, or a combination thereof. The spherical conductive material may have a particle diameter (e.g. average particle diameter, such as D50) of about 1 nm to about 100 nm, about 10 nm to about 80 nm, or about 15 nm to about 60 nm. If the particle diameter of the spherical conductive material is within the foregoing ranges, the electrical connection in the negative electrode may be further maintained or improved.

In one or more embodiments, a mixing ratio of the linear conductive material and the spherical conductive material may be a weight ratio of about 10:90 to about 90:10, a weight ratio of about 30:70 to about 70:30, or a weight ratio of about 40:60 to about 60:40. If the mixing ratio of the linear conductive material and the spherical conductive material is within the foregoing ranges, the electrical connection, which would otherwise result due to crack formation, may be maintained if Si is expanded and the adherences of the negative active material layer may be secured, so that the electrical connection between the negative active material layer and the current collector may also be secured.

In the first layer, while the mixing ratio of the linear conductive material and the spherical conductive material satisfies the foregoing ranges, an amount of the linear conductive material may be about 0.1 wt% to about 1.0 wt%, about 0.2 wt% to about 0.8 wt%, or about 0.4 wt% to about 0.6 wt% based on the total 100 wt% of the first layer. An amount of the spherical conductive material may be about 0.1 wt% to about 1.0 wt%, about 0.2 wt% to about 0.8 wt%, or about 0.4 wt% to about 0.6 wt% based on the total 100 wt% of the first layer.

If the amount of the linear conductive material satisfies the foregoing ranges, the fast charging performance may be further secured, while the electrical connection may be more maintained during charging and discharging cycle-life. If the spherical conductive material is within the foregoing ranges, the improvements in adherence and the reduction in volume expansion may be further obtained.

The Si-based material may include Si (e.g. elemental silicon), Si-C composite, SiOₓ (0<x<2), Si-Q alloy (herein Q is an element selected from an alkali metal, an alkaline-earth metal, a Group 13 element, a Group 14 element, a Group 15 element, a Group 16 element, a transition metal, a rare earth element, and a combination thereof, and not Si), or a combination thereof.

The element Q may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Ti, Ge, P, As, Sb, Bi, S, Se, Te, or a combination thereof).

The Si-C composite may include Si (e.g. elemental silicon) and a carbon-based material. The carbon-based material may be amorphous carbon and/or crystalline carbon. The composite, for example, may include a core in which Si particles and a first carbon-based material are mixed together and a second carbon-based material surrounding the core. The first carbon-based material and the second carbon-based material may be the same or different each other, and may be amorphous carbon and/or crystalline carbon. The example of the composite may include a secondary particle, for example, an aggregate where at least one Si nano particle primary particle and crystalline carbon are aggregated, an amorphous carbon coating layer surrounding the aggregate, and amorphous carbon filled into the aggregates to surround the surface of the primary particle.

The amorphous carbon may include pitch carbon, soft carbon, hard carbon, mesophase pitch carbide, sintered cokes, carbon fiber, or a combination thereof and the crystalline carbon may be natural graphite, artificial graphite, or a combination thereof. The carbon-based material may be amorphous carbon (e.g. soft carbon).

A particle diameter (e.g. average particle diameter, such as D50) of Si may be about 10 nm to about 30 µm, and according to one or more embodiments, may be about 10 nm to about 1000 nm, or according to other embodiments, may be about 20 nm to about 150 nm. If the average particle diameter of the silicon is within the foregoing ranges, the extreme volume expansion that would otherwise be caused during charge and discharge may be suppressed or reduced, and a breakage of the conductive path due to crushing of particles may be prevented or reduced.

In one or more embodiments, an amount of the Si-based material consisting the first layer may be about 70 wt% to about 99 wt%, about 80 wt% to about 99 wt%, or about 90 wt% to about 97 wt% based on the total 100 wt% of the first layer. If the amount of the Si-based material is within the foregoing ranges, higher capacity may be exhibited and the improvements in volume expansion and fast charging cycle-life retention may be exhibited.

In the first layer, the first binder may be a non-aqueous-based binder, an aqueous binder, or a combination thereof.

The non-aqueous binder may be an ethylene propylene copolymer, polyacrylonitrile, polystyrene, polyvinyl chloride, carboxylated polyvinylchloride, polyvinyl fluoride, polyurethane, polytetrafluoroethylene, polyvinylidene fluoride, polyethylene, polypropylene, polyamide imide, polyimides, or combinations thereof.

The aqueous binder may be a styrene-butadiene rubber (SBR), an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polyepichlorohydrin, polyphosphazene, an ethylene propylene diene copolymer, polyvinyl pyridine, chlorosulfonated polyethylene, latex, a polyester resin, an acrylic resin, a phenol resin, an epoxy resin, polyvinyl alcohol, or combinations thereof.

In one or more embodiments, an amount of the first binder may be suitably or appropriately adjusted based on the amounts of the Si-based material, the linear conductive material, and the spherical conductive material included in the first layer, but it is not necessary to limit it thereto.

The first binder may include a cellulose-based compound. The cellulose-based compound may be used together with the aqueous binder. The cellulose-based compound includes one or more of carboxymethyl cellulose, hydroxypropylmethyl cellulose, methyl cellulose, and/or alkali metal salts thereof. The alkali metal may be Na, K, and/or Li. The cellulose-based compound may serve as a binder, and may impart or increase viscosity to serve as a thickener. Therefore, an amount of the cellulose-based compound may be suitably or appropriately adjusted within the amount of the binder and it is necessary to limit it thereto. However, it may be, for example, about 0.1 parts by weight to about 3 parts by weight based on 100 parts by weight of the negative active material.

The crystalline carbon included in the second layer may be natural graphite, artificial graphite, or a combination thereof. In the second layer, an amount of the crystalline carbon may be about 80 wt% to about 99 wt%, about 90 wt% to about 99 wt%, or about 95 wt% to about 99 wt% based on the total 100 wt% of the second layer.

In the second layer, the second binder may be the same as or different from the first binder. In the second layer, an amount of the second binder may be about 1 wt% to about 50 wt%, about 1 wt% to about 20 wt%, or about 1 wt% to about 5 wt% based on the total 100 wt% of the second layer.

In the negative electrode according to one or more embodiments, the current collector may include one selected from a copper foil, a nickel foil, a stainless steel foil, a titanium foil, a nickel foam, a copper foam, a polymer substrate coated with a conductive metal, and a combination thereof, but is not limited thereto.

A rechargeable lithium battery according to one or more embodiments includes the negative electrode, a positive electrode, and an electrolyte.

The positive electrode may include a current collector and a positive active material layer formed on the current collector.

The positive active material may include lithiated intercalation compounds that reversibly intercalate and deintercalate lithium ions. In some embodiments, one or more composite oxides of a metal selected from cobalt, manganese, nickel, and a combination thereof, and lithium, may be used. For example, the compounds represented by one selected from the following chemical formulae may be used: LiₐA₁. _{b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1) LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂GbO₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); and LiₐFePO₄ (0.90≤a≤1.8).

In the above chemical formulas, A is selected from Ni, Co, Mn, or a combination thereof; X is selected from Al, Ni, Co, Mn, Cr, Fe, Mg, Sr, V, a rare earth element, or a combination thereof; D¹ is selected from O, F, S, P, or a combination thereof; E is selected from Co, Mn, or a combination thereof; T is selected from F, S, P, or a combination thereof; G is selected from Al, Cr, Mn, Fe, Mg, La, Ce, Sr, V, or a combination thereof; Q is selected from Ti, Mo, Mn, or a combination thereof; Z is selected from Cr, V, Fe, Sc, Y, or a combination thereof; J is selected from V, Cr, Mn, Co, Ni, Cu, or a combination thereof; and L¹ is selected from Mn, Al, or a combination thereof.

The compounds may have a coating layer on the surface, or may be mixed together with another compound having a coating layer. The coating layer may include at least one coating element compound selected from the group consisting of an oxide of a coating element, a hydroxide of the coating element, an oxyhydroxide of the coating element, an oxycarbonate of the coating element, and a hydroxyl carbonate of the coating element. The compound for the coating layer may be amorphous and/or crystalline. The coating element included in the coating layer may include Mg, Al, Co, K, Na, Ca, Si, Ti, V, Sn, Ge, Ga, B, As, Zr, or a mixture thereof. The coating layer may be provided in a method having no (or substantially no) adverse influence on properties of a positive electrode active material by using these elements in the compound, and for example, the method may include any suitable coating method such as spray coating, dipping, and/or the like, but it is not necessary to be illustrated in more detail here because it should be readily apparent to those of ordinary skill in the art upon reviewing this disclosure.

In the positive electrode, an amount of the positive active material may be about 90 wt% to about 98 wt% based on the total weight of the positive active material layer.

In embodiments, the positive active material layer may further include a binder and a conductive material (e.g., an electrically conductive material). The binder and the conductive material may be included in an amount of about 1 wt% to about 5 wt%, respectively based on the total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or the like, but is not limited thereto.

The conductive material is included to provide electrode conductivity (e.g., electrical conductivity), and any suitable electrically conductive material may be used as a conductive material unless it causes a chemical change (e.g., an undesirable chemical change in the rechargeable lithium battery). Examples of the conductive material may include a carbon-based material such as natural graphite, artificial graphite, carbon black, acetylene black, ketjen black, a carbon fiber and the like; a metal-based material of a metal powder or a metal fiber including copper, nickel, aluminum, silver, and the like; a conductive polymer such as a polyphenylene derivative; or a mixture thereof.

The current collector may include Al, but is not limited thereto.

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, and/or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, caprolactone, and/or the like. The ether-based solvent may be dibutyl ether, tetraglyme, diglyme, dimethoxyethane, 2-methyltetrahydrofuran, 2,5-dimethyltetrahydrofuran, tetrahydrofuran, and/or the like. The alcohol-based solvent may include ethyl alcohol, isopropyl alcohol, and/or the like, and examples of the aprotic solvent include nitriles such as R-CN (where R is a C2 to C20 linear, branched, or cyclic hydrocarbon, and may include a double bond, an aromatic ring, and/or an ether bond), amides such as dimethylformamide, dioxolanes such as 1,3-dioxolane, 1,4-dioxolane, sulfolanes, and/or the like.

The organic solvent may be used alone or in a mixture. If the organic solvent is used in a mixture, the mixture ratio may be controlled in accordance with a suitable or desirable battery performance, and it may be any suitable one generally used in the related art.

If the non-aqueous organic solvent is mixed and used, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be used. The propionate-based solvent may be methyl propionate, ethyl propionate, propyl propionate, or a combination thereof.

Herein, if the cyclic carbonate and the chain carbonate or the cyclic carbonate and the propionate-based solvent are mixed together, they may be mixed together in a volume ratio of about 1:1 to about 1:9 and thus performance of an electrolyte solution may be improved. In some embodiments, if the cyclic carbonate, the chain carbonate, and the propionate-based solvent are mixed together, they may be mixed together in a volume ratio of about 1:1:1 to about 3:3:4. The mixing ratios of the solvents may be suitably or appropriately adjusted according to suitable or desirable properties.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

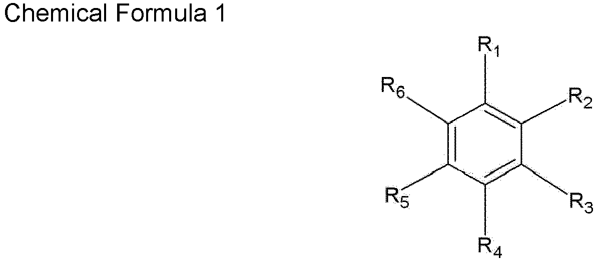

In Chemical Formula 1, R₁ to R₆ are the same or different and are selected from hydrogen, a halogen, a C1 to C10 alkyl group, a haloalkyl group, and a combination thereof.

Examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylethyl carbonate, vinylene carbonate and/or an ethylene carbonate-based compound represented by Chemical Formula 2, as an additive for improving cycle life.

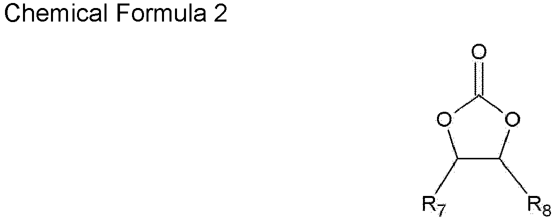

In Chemical Formula 2, R₇ and R₈ are the same or different and may each independently be hydrogen, a halogen, a cyano group (CN), a nitro group (NO₂), or a C1 to C5 fluoroalkyl group, provided that at least one selected from R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. In embodiments that further include the additive for improving cycle life, an amount of the additive may be suitably controlled within a suitable or appropriate range.

The lithium salt dissolved in an organic solvent supplies a battery with lithium ions, basically operates the rechargeable lithium battery, and improves transportation of the lithium ions between positive and negative electrodes. Examples of the lithium salt include at least one or two supporting salts selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer of about 1 to about 20, lithium difluoro(bisoxalato) phosphate), LiCl, Lil, LiB(C₂O₄)₂ (lithium bis(oxalato) borate: LiBOB) and lithium difluoro(oxalato)borate (LiDFOB). A concentration of the lithium salt may range from about 0.1 M to about 2.0 M. If the lithium salt is included at the above concentration range, an electrolyte may have excellent performance and lithium ion mobility due to suitable or optimal electrolyte conductivity and viscosity.

A separator may be between the positive electrode and the negative electrode depending on a type (or kind) of a rechargeable lithium battery. The separator may use polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

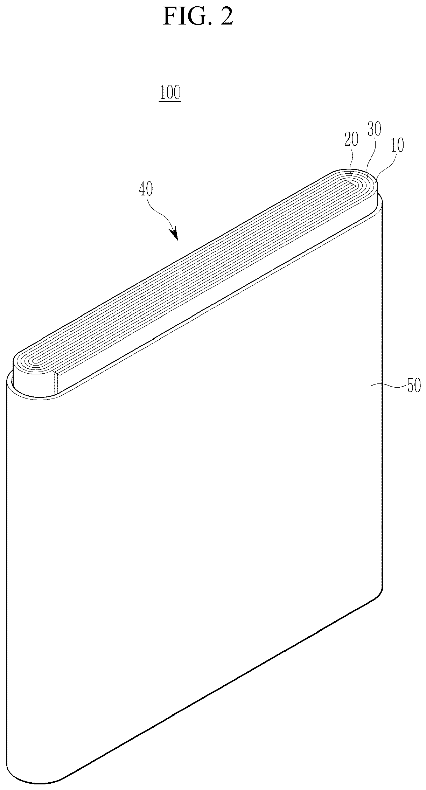

FIG. 2 is an exploded perspective view of a rechargeable lithium battery according to an embodiment. The rechargeable lithium battery according to some embodiments is illustrated as a prismatic battery but is not limited thereto and may include variously-shaped batteries such as a cylindrical battery, a pouch battery, and/or the like.

Referring to FIG. 2, a rechargeable lithium battery 100 according to an embodiment may include an electrode assembly 40 manufactured by winding a separator 30 between a positive electrode 10 and a negative electrode 20 and a case 50 housing the electrode assembly 40. These examples, however, are not in any sense to be interpreted as limiting the scope of the present disclosure.

Hereinafter, examples of the present disclosure and comparative examples are described. These examples, however, are not in any sense to be interpreted as limiting the scope of the present disclosure.

### Example 1

96.6 wt% of a silicon-carbon composite, 0.5 wt% of a single-walled carbon nanotube (average length: 10 µm), 0.4 wt% of carbon black (average particle diameter D50: 16 nm), 0.8 wt% of carboxymethylcellulose, and 1.7 wt% of a styrene-butadiene rubber binder were mixed together in a water solvent to prepare a first layer slurry. The silicon-carbon composite had secondary particles where silicon primary particles having an average particle diameter (D50) of 100 nm and coated with soft carbon, were agglomerated, and a soft carbon coating layer coated on the secondary particle. Based on the total weight of the silicon-carbon composite, an amount of silicon primary particles was 40 wt% and an amount of soft carbon was 60 wt%.

97 wt% of an artificial graphite negative active material and 3 wt% of a styrene-butadiene rubber binder were mixed together in a water solvent to prepare a second layer slurry.

The first layer slurry was coated on a Cu foil current collector and dried, and then the second layer slurry was coated thereon and dried followed by pressurizing to prepare a negative electrode. In the negative electrode, a thickness of the first layer was 15 µm and a thickness of the second layer was 143 µm.

The negative electrode, a lithium metal counter electrode, and an electrolyte were used to fabricate a half-cell. The electrolyte included 1.45M LiPF₆ dissolved in a mixed solvent of ethylene carbonate, ethylmethyl carbonate, and dimethyl carbonate (20:10:70 by a volume ratio).

### Example 2

A negative electrode and a half-cell were fabricated by substantially the same procedure as in Example 1, except that a thickness of the first layer was 23 µm and a thickness of the second layer was 135 µm in the negative electrode.

### Example 3

A negative electrode and a half-cell were fabricated by substantially the same procedure as in Example 1, except that a thickness of the first layer was 35 µm and a thickness of the second layer was 123 µm in the negative electrode.

### Example 4

96.6 wt% of a silicon-carbon composite, 0.8 wt% of a single-walled carbon nanotube (average length: 10 µm), 0.1 wt% of carbon black (average particle diameter D50: 16 nm), 0.8 wt% of carboxymethylcellulose, and 1.7 wt% of a styrene-butadiene rubber binder were mixed together in a water solvent to prepare a first layer slurry.

A negative electrode and a half-cell were fabricated by substantially the same procedure as in Example 1, except for using the first slurry.

### Example 5

96.6 wt% of a silicon-carbon composite, 0.1 wt% of a single-walled carbon nanotube (average length: 10 µm), 0.8 wt% of carbon black (average particle diameter D50: 16 nm), 0.8 wt% of carboxymethylcellulose, and 1.7 wt% of a styrene-butadiene rubber binder were mixed together in a water solvent to prepare a first layer slurry.

A negative electrode including the first layer and the second layer, and a half-cell were fabricated by substantially the same procedure as in Example 1, except for using the first slurry.

### Comparative Example 1

A negative electrode and a half-cell were fabricated by substantially the same procedure as in Example 1, except that a thickness of the first layer was 79 µm and a thickness of the second layer was 79 µm in the negative electrode.

### Comparative Example 2

A negative electrode including the first layer and the second layer, and a half-cell was fabricated by substantially the same procedure as in Example 1, except that a thickness of the first layer was 111 µm and a thickness of the second layer was 40 µm in the negative electrode.

### Comparative Example 3

80 wt% of a silicon-carbon composite negative active material, 16.6 wt% of an artificial graphite negative active material, 0.5 wt% of a single-walled carbon nanotube (average length: 10 µm), 0.4 wt% of carbon black (average particle diameter D50: 16 nm), 0.8 wt% of carboxymethylcellulose, and 1.7 wt% of a styrene-butadiene rubber binder were mixed together in a water solvent to prepare a first layer slurry.

A negative electrode and a half-cell were fabricated by substantially the same procedure as in Example 1, except for using the foregoing first slurry.

### Comparative Example 4

96.6 wt% of artificial graphite, 0.5 wt% of a single-walled carbon nanotube (average length: 10 µm), 0.4 wt% of carbon black (average particle diameter D50: 16 nm), 0.8 wt% of carboxymethylcellulose, and 1.7 wt% of a styrene-butadiene rubber binder were mixed together in a water solvent to prepare a first layer slurry.

A negative electrode and a half-cell were fabricated by substantially the same procedure as in Example 1, except for using the foregoing first slurry.

### Experimental Example 1) Evaluation of fast charge characteristic

The discharge capacities of the cells according to Examples 1 to 5 and Comparative Examples 1 to 4 were measured at 25 °C under a condition of 2.8 V to 4.25 V and 0.33 C, and then charging and discharging were carried out at 2.5 C for 60 cycles until SOC 80% (charge refers to as charge to be 80% of charge capacity based 100% of entire battery charge capacity and discharge refers to as discharge to be 80% of discharge capacity based 100% of entire battery discharge capacity) was reached. Low rate charge and discharge (0.5 C) were performed for each charging and discharging cycle. Charging and discharging were performed alternately at 2.5 C and 0.5 C. A capacity ratio of charge capacity at 60^{th} cycle relative to charge capacity at 1^{st} cycle was measured. The results are shown in Table 1, as fast charging characteristic (%).

**Table 1**

| | Fast charge characteristic (%) |
|---|---|
| Example 1 | 97.7 |
| Example 2 | 96.7 |
| Example 3 | 96.0 |
| Example 4 | 97.3 |
| Example 5 | 97.0 |
| Comparative Example 1 | 93.0 |
| Comparative Example 2 | 88.0 |
| Comparative Example 3 | 95.5 |
| Comparative Example 4 | Less than 80 % of initial charge capacity (Overvoltage) |

As shown in Table 1, Examples 1 to 5 including the linear conductive material and the spherical conductive material, together with the Si-based material included in the first layer on the current collector, exhibited excellent fast charging characteristics.

Whereas Comparative Example 3 including the linear conductive material and the spherical conductive material, together with the Si-based material and artificial graphite in the first layer, exhibited poor fast charge characteristics. Comparative Example 4 including the linear conductive material and the spherical conductive material, together with artificial graphite in the first layer exhibited surprisingly deteriorated initial charge capacity of less than 80 %.

While the subject matter of this disclosure has been described in connection with what is presently considered to be practical example embodiments, it is to be understood that the present disclosure is not limited to the disclosed embodiments, but, on the contrary, the invention is defined by the appended claims.

## Claims

1. A negative electrode for a rechargeable lithium battery, comprising:
a current collector;
a first layer on the current collector, the first layer consisting of a Si-based material, a linear conductive material, a spherical conductive material, and a first binder; and
a second layer on the first layer, the second layer consisting of crystalline carbon and a second binder,
wherein a thickness of the first layer is thinner than a thickness of the second layer.

2. The negative electrode for a rechargeable lithium battery as claimed in claim 1, wherein the linear conductive material comprises carbon nanotube, carbon nanofiber, or a combination thereof.

3. The negative electrode for a rechargeable lithium battery as claimed in claim 2, wherein the carbon nanotube comprises a single-walled carbon nanotube, a double-walled carbon nanotube, a multi-walled carbon nanotube, or a combination thereof.

4. The negative electrode for a rechargeable lithium battery as claimed in any one of claims 1 to 3, wherein:
the spherical conductive material comprises carbon black, denka black, ketjen black, acetylene black, crystalline carbon, or a combination thereof.

5. The negative electrode for a rechargeable lithium battery as claimed in any one of claims 1 to 4, wherein a ratio of the thickness of the first layer to a thickness of the second layer is about 5:95 to about 30:70.

6. The negative electrode for a rechargeable lithium battery as claimed in any one of claims 1 to 5, wherein a mixing ratio of the linear conductive material and the spherical conductive material is about 10:90 to about 90:10 by a weight ratio.

7. The negative electrode for a rechargeable lithium battery as claimed in any one of claims 1 to 6, wherein an amount of the linear conductive material is about 0.1 wt% to about 1.0 wt% based on the total 100 wt% of the first layer.

8. The negative electrode for a rechargeable lithium battery as claimed in any one of claims 1 to 7, wherein an amount of the spherical conductive material is about 0.1 wt% to about 1.0 wt% based on the total 100 wt% of the first layer.

9. The negative electrode for a rechargeable lithium battery as claimed in any one of claims 1 to 8, wherein the linear conductive material has an average length of about 0.5 µm to about 20 µm.

10. The negative electrode for a rechargeable lithium battery as claimed in any one of claims 1 to 9, wherein the spherical conductive material has a particle diameter of about 1 nm to about 100 nm, wherein the particle diameter indicates an average particle diameter D50 where a cumulative volume is 50 volume% in the particle size distribution.

11. The negative electrode for a rechargeable lithium battery as claimed in any one of claims 1 to 10, wherein the Si-based material comprises Si; Si-C composite; SiOₓ (0<x<2); Si-Q alloy wherein Q is an element selected from an alkali metal, an alkaline-earth metal, a Group 13 element, a Group 14 element, a Group 15 element, a Group 16 element, a transition metal, a rare earth element, and a combination thereof, and not Si; or a combination thereof.

12. The negative electrode for a rechargeable lithium battery as claimed in any one of claims 1 to 11, wherein:
the crystalline carbon in the second layer comprises natural graphite, artificial graphite, or a combination thereof.

13. A rechargeable lithium battery, comprising:
a negative electrode of any one of claims 1 to 12;
a positive electrode; and
an electrolyte.

## Patentansprüche

1. Negative Elektrode für eine wiederaufladbare Lithiumbatterie, umfassend:
einen Stromkollektor;
eine erste Schicht auf dem Stromkollektor, wobei die erste Schicht aus einem Sibasierten Material, einem linearen leitfähigen Material, einem sphärischen leitfähigen Material und einem ersten Bindemittel besteht; und
eine zweite Schicht auf der ersten Schicht, wobei die zweite Schicht aus kristallinem Kohlenstoff und einem zweiten Bindemittel besteht,
wobei eine Dicke der ersten Schicht dünner als eine Dicke der zweiten Schicht ist.

2. Negative Elektrode für eine wiederaufladbare Lithiumbatterie nach Anspruch 1, wobei das lineare leitfähige Material Kohlenstoffnanoröhren, Kohlenstoffnanofasern oder eine Kombination davon umfasst.

3. Negative Elektrode für eine wiederaufladbare Lithiumbatterie nach Anspruch 2, wobei das Kohlenstoffnanorohr ein einwandiges Kohlenstoffnanorohr, ein doppelwandiges Kohlenstoffnanorohr, ein mehrwandiges Kohlenstoffnanorohr oder eine Kombination davon umfasst.

4. Negative Elektrode für eine wiederaufladbare Lithiumbatterie nach einem der Ansprüche 1 bis 3, wobei:
das sphärische leitfähige Material Ruß, Denka-Ruß, Ketjen-Ruß, Acetylen-Ruß, kristallinen Kohlenstoff oder einer Kombination davon umfasst.

5. Negative Elektrode für eine wiederaufladbare Lithiumbatterie nach einem der Ansprüche 1 bis 4, wobei ein Verhältnis der Dicke der ersten Schicht zu einer Dicke der zweiten Schicht etwa 5:95 bis etwa 30:70 beträgt.

6. Negative Elektrode für eine wiederaufladbare Lithiumbatterie nach einem der Ansprüche 1 bis 5, wobei ein Mischungsverhältnis des linearen leitfähigen Materials und des sphärischen leitfähigen Materials etwa 10:90 bis etwa 90:10 nach einem Gewichtsverhältnis beträgt.

7. Negative Elektrode für eine wiederaufladbare Lithiumbatterie nach einem der Ansprüche 1 bis 6, wobei eine Menge des linearen leitfähigen Materials etwa 0,1 Gew.-% bis etwa 1,0 Gew.-% beträgt, bezogen auf die gesamten 100 Gew.-% der ersten Schicht.

8. Negative Elektrode für eine wiederaufladbare Lithiumbatterie nach einem der Ansprüche 1 bis 7, wobei eine Menge des linearen sphärischen Materials etwa 0,1 Gew.-% bis etwa 1,0 Gew.-% beträgt, bezogen auf die gesamten 100 Gew.-% der ersten Schicht.

9. Negative Elektrode für eine wiederaufladbare Lithiumbatterie nach einem der Ansprüche 1 bis 8, wobei das lineare leitfähige Material eine durchschnittliche Länge von etwa 0,5 µm bis etwa 20 µm aufweist.

10. Negative Elektrode für eine wiederaufladbare Lithiumbatterie nach einem der Ansprüche 1 bis 9, wobei das sphärische leitfähige Material einen Partikeldurchmesser von etwa 1 nm bis etwa 100 nm aufweist, wobei der Partikeldurchmesser einen durchschnittlichen Partikeldurchmesser D50 angibt, wobei ein kumulatives Volumen 50 Volumenprozent in der Partikelgrößenverteilung beträgt.

11. Negative Elektrode für eine wiederaufladbare Lithiumbatterie nach einem der Ansprüche 1 bis 10, wobei das Si-basierte Material Si umfasst; Si-C-Komposit; SiOₓ (0 < x < 2); Si-Q-Legierung, wobei Q ein Element ist, das aus einem Alkalimetall, einem Erdalkalimetall, einem Element der Gruppe 13, einem Element der Gruppe 14, einem Element der Gruppe 15, einem Element der Gruppe 16, einem Übergangsmetall, einem Seltenerdelement und einer Kombination davon ausgewählt ist und nicht Si ist; oder eine Kombination davon.

12. Negative Elektrode für eine wiederaufladbare Lithiumbatterie nach einem der Ansprüche 1 bis 11, wobei:
der kristalline Kohlenstoff in der zweiten Schicht natürliches Graphit, künstliches Graphit oder eine Kombination davon umfasst.

13. Wiederaufladbare Lithiumbatterie, umfassend:
eine negative Elektrode nach einem der Ansprüche 1 bis 12;
eine positive Elektrode; und
einen Elektrolyt.

## Revendications

1. Électrode négative pour une batterie au lithium rechargeable, comprenant :
un collecteur de courant ;
une première couche sur le collecteur de courant, la première couche consistant en un matériau à base de Si, un matériau conducteur linéaire, un matériau conducteur sphérique et un premier liant ; et
une seconde couche sur la première couche, la seconde couche consistant en un carbone cristallin et un second liant,
dans lequel l'épaisseur de la première couche est plus fine que l'épaisseur de la seconde couche.

2. Électrode négative pour une batterie au lithium rechargeable selon la revendication 1, dans laquelle le matériau conducteur linéaire comprend un nanotube de carbone, une nanofibre de carbone ou une combinaison de ceux-ci.

3. Électrode négative pour une batterie au lithium rechargeable selon la revendication 2, dans laquelle le nanotube de carbone comprend un nanotube de carbone à paroi unique, un nanotube de carbone à double paroi, un nanotube de carbone à parois multiples ou une combinaison de ceux-ci.

4. Électrode négative pour une batterie au lithium rechargeable selon l'une quelconque des revendications 1 à 3, dans laquelle :
le matériau conducteur sphérique comprend du noir de carbone, du noir denka, du noir de ketjen, du noir d'acétylène, du carbone cristallin ou une combinaison de ceux-ci.

5. Électrode négative pour une batterie au lithium rechargeable selon l'une quelconque des revendications 1 à 4, dans laquelle le rapport entre l'épaisseur de la première couche et l'épaisseur de la seconde couche est d'environ 5:95 à environ 30:70.

6. Électrode négative pour une batterie au lithium rechargeable selon l'une quelconque des revendications 1 à 5, dans laquelle un rapport de mélange du matériau conducteur linéaire et du matériau conducteur sphérique est d'environ 10:90 à environ 90:10 par un rapport de poids.

7. Électrode négative pour une batterie au lithium rechargeable selon l'une quelconque des revendications 1 à 6, dans laquelle une quantité du matériau conducteur linéaire est d'environ 0,1 % en poids à environ 1,0 % en poids sur la base du total de 100 % en poids de la première couche.

8. Électrode négative pour une batterie au lithium rechargeable selon l'une quelconque des revendications 1 à 7, dans laquelle une quantité du matériau conducteur sphérique est d'environ 0,1 % en poids à environ 1,0 % en poids sur la base du total de 100 % en poids de la première couche.

9. Électrode négative pour une batterie au lithium rechargeable selon l'une quelconque des revendications 1 à 8, dans laquelle le matériau conducteur linéaire présente une longueur moyenne d'environ 0,5 µm à environ 20 µm.

10. Électrode négative pour une batterie au lithium rechargeable selon l'une quelconque des revendications 1 à 9, dans laquelle le matériau conducteur sphérique présente un diamètre de particule d'environ 1 nm à environ 100 nm, dans laquelle le diamètre de particule indique un diamètre de particule moyen D50 où un volume cumulé est de 50 % en volume dans la distribution de taille de particules.

11. Électrode négative pour une batterie au lithium rechargeable selon l'une quelconque des revendications 1 à 10, dans laquelle le matériau à base de Si comprend du Si ; un composite Si-C ; SiOₓ (0 < x < 2) ; un alliage Si-Q dans lequel Q est un élément choisi parmi un métal alcalin, un métal alcalino-terreux, un élément du groupe 13, un élément du groupe 14, un élément du groupe 15, un élément du groupe 16, un métal de transition, un élément des terres rares et une combinaison de ceux-ci, et non Si ; ou une combinaison de ceux-ci.

12. Électrode négative pour une batterie au lithium rechargeable selon l'une quelconque des revendications 1 à 11, dans laquelle :
le carbone cristallin dans la seconde couche comprend du graphite naturel, du graphite artificiel ou une combinaison de ceux-ci.

13. Batterie au lithium rechargeable, comprenant :
une électrode négative selon l'une quelconque des revendications 1 à 12;
une électrode positive ; et
un électrolyte.
